# EUROPÄISCHE PATENTSCHRIFT

(11) **EP 2 418 107 B1**
(45) Veröffentlichungstag und Bekanntmachung des Hinweises auf die Patenterteilung: **16.01.2013**
(21) Anmeldenummer: 10008024.1
(22) Anmeldetag: 31.07.2010
(51) Int. Cl.: B60D 5/00, B61D 17/22

(54) **Rahmen zur Aufnahme des Endes mindestens eines Balges**
Frame for holding the end of at least one bellows
Cadre pour la réception d'une extrémité d'au moins une poutre

(43) Veröffentlichungstag der Anmeldung: 15.02.2012
(73) Patentinhaber: Hübner GmbH, 34123 Kassel (DE)
(72) Erfinder: Jünke, Volker, 34587 Felsberg (DE)
(74) Vertreter: Walther, Walther & Hinz GbR

(56) Entgegenhaltungen:
- EP-A1- 0 329 031
- DE-A1- 10 044 127
- DE-U1- 7 815 352
- DE-U1-202009 008 164
- FR-A- 351 864

## Beschreibung

Die Erfindung betrifft einen Rahmen zur Aufnahme des Endes mindestens eines Balges und ein im Querschnitt U-förmiges Übersetzungsprofil, wobei der Rahmen an mindestens einem Ende eine im Querschnitt U-förmige Aufnahme zum Erfassen des Balgendes eines Balges aufweist.

Gelenkig miteinander verbundene Fahrzeuge und hier insbesondere Schienenfahrzeuge weisen zwischen den beiden Fahrzeugteilen einen sogenannten Übergang auf. Der Übergang umfasst ebenfalls einen Balg, entweder einen Wellen- oder einen Faltenbalg, wobei der Balg mittels sogenannter Anschraubrahmen an der Stirnseite des jeweiligen Fahrzeugteiles befestigt ist. Der Anschraubrahmen ist ein umlaufend ausgebildeter, etwa rechteckförmiger Rahmen, der auf zumindest der Außenseite eine U-förmige Aufnahme zur einklemmbaren Aufnahme des Endes eines im Querschnitt rechteckförmig umlaufenden Balges aufweist.

Aus der DE 20 2009 008 164 U1 ist in dem Zusammenhang ein umlaufender Befestigungsrahmen mit einer U-förmigen Aussparung zur Aufnahme des Balgendes bekannt, wobei die Befestigungsrahmen an der Stirnwand des Fahrzeugs anschraubbar ist. Zur Abdeckung der Verschraubung ist eine auf den Befestigungsrahmen aufclipsbare Abdeckleiste vorgesehen.

Die FR 351.864 zeigt einen viergeteilten Balg, bei dem die einzelnen Balgteile miteinander verbunden sind.

Aus der DE 100 44 127 A 1 ist ein umlaufender im Querschnitt U-förmiger Rahmen bekannt, der an der Stirnseite des Fahrzeugs angebracht wird. In dem U-förmigen Rahmen sitzt ein Kederprofil aus einem Elastomer, das einen Schlitz zur Aufnahme des Balgendes aufweist. Das Profil besitzt darüber hinaus eine Aufnahme für ein Spannkabel, wobei durch das Spannkabel im kederprofil der Faltenbalg in dem U-förmigen Rahmen fixiert wird.

Es sind allerdings auch sogenannte geteilte Übergänge mit zwei Balghälften bekannt, bei denen mittig die beiden Balghälften durch sogenannte Kuppelrahmen miteinander verbunden sind. Ein solcher Kuppelrahmen ist in Bezug auf die Anbindung des Endes des Balges in gleicher Weise ausgebildet, wie dies bei dem zuvor erwähnten Anschraubrahmen der Fall ist. Nun ist bekannt, dass die Übergänge auch mit Doppelwellenbälgen versehen sein können. Dies ist insbesondere bei Hochgeschwindigkeitszügen der Fall, um zum Einen eine höhere Geräuschdämmung zu erzielen und zum Anderen zu verhindern, dass die Druckwelle, die entsteht, wenn sich entweder zwei Züge passieren oder der Zug in einen Tunnel einfährt, auf das Innere des Übergangs durchschlägt. Insofern ist bereits bekannt, am Anschraubrahmen bzw. auch am Kuppelrahmen auf der Innenseite des Kuppel- oder Anschraubrahmens eine weitere U-förmige Aufnahme vorzusehen, um auch dort einen weiteren Balg anzubringen.

Die EP 0 329 031 A1 beschreibt einen Endrahmen zur Aufnahme der Bälge eines Doppelwellenbalges.

Sowohl Eisenbahnzüge als auch Straßenbahnzüge bzw. auch Gelenkbusse haben einen Lebensdauerzyklus, der 10, 15 oder auch 20 Jahre beträgt. Innerhalb dieser Zeitspanne kann es vorkommen, dass der Balg verschleißt. Bislang ist es so, dass der Balg komplett ausgetauscht wird, also einschließlich der Anschraub- als auch der Kuppelrahmen. Nun ist aber der Kuppelrahmen bzw. auch der Anschraubrahmen ein erheblicher Kostenfaktor bei der Herstellung des Balges. Darüber hinaus ist bekannt, dass bei einem Doppelwellenbalg üblicherweise der äußere Balg wesentlich schneller verschleißt als der innen liegende Balg.

Die der Erfindung zugrunde liegende Aufgabe besteht demzufolge darin, den Balg eines Überganges kostensparend in einen weiterhin gebrauchsfähigen Zustand zu versetzen.

Zur Lösung der Aufgabe wird erfindungsgemäß vorgeschlagen, dass stirnseitig auf der U-förmigen Aufnahme das Ende eines Balges durch das im Querschnitt U-förmiges Übersetzungsprofil fixierbar ist. Zum Austausch des verschlissenen Balges wird nun derart vorgegangen, dass zunächst der Balg im Bereich der U-förmigen Aufnahme am Rahmen abgeschnitten wird. Weiterhin ist es zweckdienlich, das Balgende auf der U-förmigen Aufnahme zu halten, was beispielsweise durch Kleben und/oder Nieten geschehen kann. Dann wird das U-förmige Übersetzungsprofil über die U-förmige Aufnahme mit dem darauf fixierten Balgende gestülpt wird. Das Übersetzungsprofil wird dann im Bereich seiner Schenkel geclincht bzw. zusammengequetscht, um auf diese Weise den neuen Balg mit der U-förmigen Aufnahme, das heißt mit dem Rahmen der als Kuppel- oder auch als Anschraubrahmen ausgebildet sein kann, zu verbinden. Vorteilhaft besitzt das im Querschnitt U-förmige Übersetzungsprofil auf der Innenseite zumindest des Schenkels, der das Ende des neuen Balges erfasst, eine Verzahnung, um den Balg sicher erfassen zu können.

Nach einer Ausführungsform wird auf die U-förmige Aufnahme ein im Querschnitt U-förmiger, insbesondere umlaufender Balgrahmen aufgesetzt wird, wobei dieser Balgrahmen das Ende eines Balges insbesondere umlaufend erfasst. In einem weiteren Arbeitsschritt wird der U-förmige Balgrahmen auf der U-förmigen Aufnahme fixiert, beispielsweise durch Nieten verbunden, wobei dann sowohl der Balgrahmen als auch die U-förmige Aufnahme durch das im Querschnitt U-förmige Übersetzungsprofil erfasst werden. Hieraus wird deutlich, dass durch das im Querschnitt U-förmige Übersetzungsprofil sowohl der aufgesetzte U-förmige Balgrahmen als auch die U-förmige Aufnahme erfasst werden, wobei insbesondere durch ein sogenanntes Clinchen oder Zusammenpressen des Übersetzungsprofils im Bereich seiner Schenkel der U-förmige Balgrahmen quasi formschlüssig mit der U-förmigen Aufnahme und damit mit dem Rahmen verbunden wird.

Alternativ wäre denkbar zum Austausch eines verschlissenen Balges, beispielsweise eines Außenwellenbalges eines Doppelwellenbalges, die U-förmige Aufnahme für den Balg auf dem gesamten Umfang aufzubiegen, den alten Balg zu entnehmen, das Ende eines neuen Balges in die aufgebogene U-förmige Aufnahme einzusetzen, um die Schenkel der U-förmigen Aufnahme dann wieder zusammen zu pressen, um so den neuen Balg am Rahmen zu fixieren. Es hat sich allerdings herausgestellt, dass dies nicht durchführbar ist, weil das Material des Rahmens, insbesondere Aluminium durch das mehrmalige Verbiegen, insbesondere den Aufbiegevorgang und das nachfolgende Zusammenpressen oder Clinchen rissig wird.

Durch die erfindungsgemäße Lösung hingegen wird in einfacher und im Wesentlichen kostengünstiger Weise der Austausch eines Balges ermöglicht. Kostensparend ist diese Vorgehensweise insbesondere bei Übergängen mit Doppelwellenbalg, da wie bereits ausgeführt, häufig nur der Außenwellenbalg verschleißt, der innere Balg allerdings durchaus noch in einem akzeptablen Zustand ist und insofern nicht ausgetauscht werden muss. Nach dem Stand der Technik ist es so, dass der Balg, auch wenn er als Doppelwellenbalg ausgebildet ist und der innere Balg durchaus nicht verschlissen war, der Doppelwellenbalg einschließlich der Rahmen dennoch komplett entsorgt wurde.

Weitere vorteilhafte Merkmale ergeben sich aus den Unteransprüchen.

So ist insbesondere vorgesehen, dass der Rahmen als Kuppelrahmen zur Verbindung zweier Balghälften oder als Anschraubrahmen ausgebildet ist. Es sei an dieser Stelle noch einmal darauf hingewiesen, dass der Kuppelrahmen ein solcher ist, der mit einem zweiten Kuppelrahmen in eine lösbare Verbindung bringbar ist. Ein Anschraubrahmen ist ein solcher, durch den das Balgende an der Stirnseite des Fahrzeugs fixiert wird. Der Anschraubrahmen wird, wie der Begriff dies bereits ausdrückt an der Stirnseite des Fahrzeugs mit Schrauben befestigt.

Nach einem besonderen Merkmal der Erfindung ist vorgesehen, dass der im Querschnitt U-förmige Balgrahmen einen verlängerten Schenkel aufweist, der sich auf dem Rahmen, beispielsweise auf dem Kuppelrahmen abstützt. Hierdurch wird erreicht, dass beim Zusammenquetschen oder Clinchen der Schenkel des U-förmigen Balgrahmens zum Zwecke der Fixierung des Balgendes dieser Balgrahmen im Wesentlichen seine Position einbehält. Ohne solch einen verlängerten Schenkel, der sich auf dem Rahmen abstützt, verbiegt sich der gesamte U-förmige Balgrahmen zusammen mit der U-förmigen Aufnahme, was nachteilig ist, wenn der nunmehr neu eingesetzte Balg später ebenfalls getauscht werden muss. Dies umso mehr, wenn das Übersetzungsprofil mit seinem einen Schenkel ebenfalls entsprechend verformt werden muss, um den U-förmigen Balgrahmen sicher auf der U-förmigen Aufnahme des Rahmens zu halten. Dies deshalb, weil zumindest die Öffnung des U-förmigen Übersetzungsprofils für Werkzeug dann nur schwer zugänglich ist. Grundsätzlich gilt allerdings, dass die Funktion bei der Anbringung eines üblichen Balgrahmens auf der U-förmigen Aufnahme nicht eingeschränkt ist.

Nach einem weiteren Merkmal der Erfindung weist der Rahmen mindestens eine, vorzugsweise zwei umlaufende Nuten zur Aufnahme eines Dichtungsprofils auf. Mit diesen Dichtungsprofilen liegt der Rahmen entweder als Anschraubrahmen an der Stirnseite des Fahrzeugs oder als Kuppelrahmen an dem benachbarten Kuppelrahmen der anderen Balghälfte an. In jedem Fall gilt, dass der Anschraubrahmen nicht unmittelbar am Chassis des Fahrzeugs anliegt, sondern einen geringfügigen Abstand aufweist, sodass genügend Raum für den einen Schenkel des Übersetzungsprofils vorhanden ist. Dies gilt auch in Bezug auf den Kuppelrahmen, da dieser ebenfalls mit einem Abstand von in etwa der Dicke der Dichtungsprofile an dem benachbarten Kuppelrahmen anliegt, sodass auch in diesem Fall das im Querschnitt U-förmige Übersetzungsprofil sowohl den U-förmigen Balgrahmen als auch die U-förmige Aufnahme erfassen kann.

Nach einer Variante ist vorgesehen, dass stirnseitig auf der U-förmigen Aufnahme unmittelbar das Ende eines Balges durch ein im Querschnitt U-förmiges Übersetzungsprofil fixierbar ist.

Anhand der Zeichnungen wird die Erfindung nachstehend beispielhaft näher erläutert.
- Fig. 1: zeigt schematisch einen rechteckförmigen Anschraubrahmen;
- Fig. 2: zeigt den Anschraubrahmen im Schnitt mit aufgesetztem U-förmigen Balgrahmen auf der U-förmigen Aufnahme in einer ersten Ausführungsform;
- Fig. 3: zeigt eine Ausführungsform gemäß Fig. 2, wobei jedoch der eine Schenkel des U-förmigen Balgrahmens verlängert ist;
- Fig. 4: zeigt eine Ausführungsform, bei der das Balgende auf der U-förmigen Aufnahme aufliegend unmittelbar durch das Übersetzungsprofil erfasst wird.

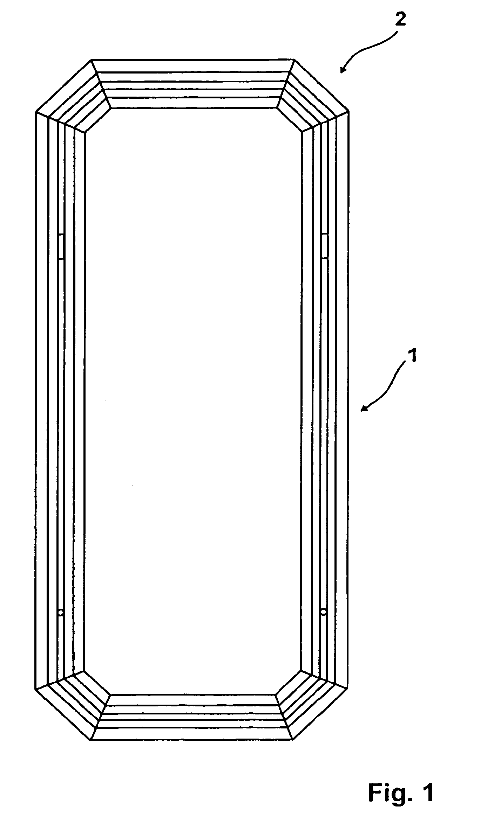

Der gemäß Fig. 1 mit 1 bezeichnete umlaufende Kuppelrahmen ist etwa rechteckförmig ausgebildet und weist abgeflachte Ecken 2 auf. Ein Außenrahmen (nicht dargestellt) ist im Querschnitt im Wesentlichen ähnlich ausgebildet.

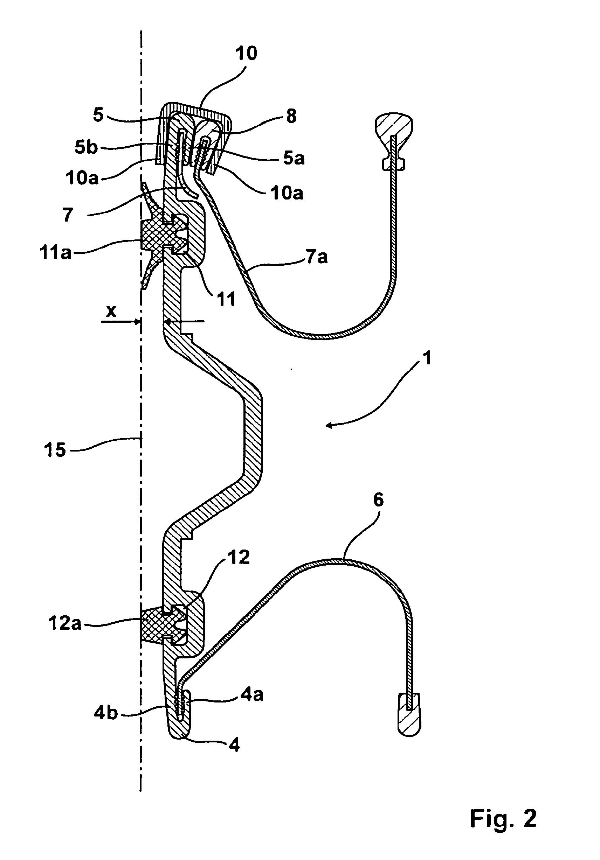

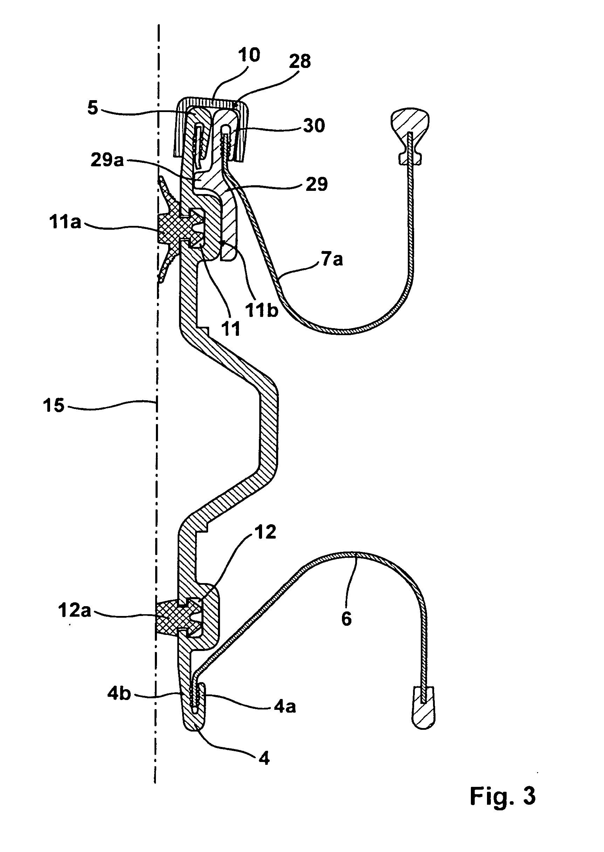

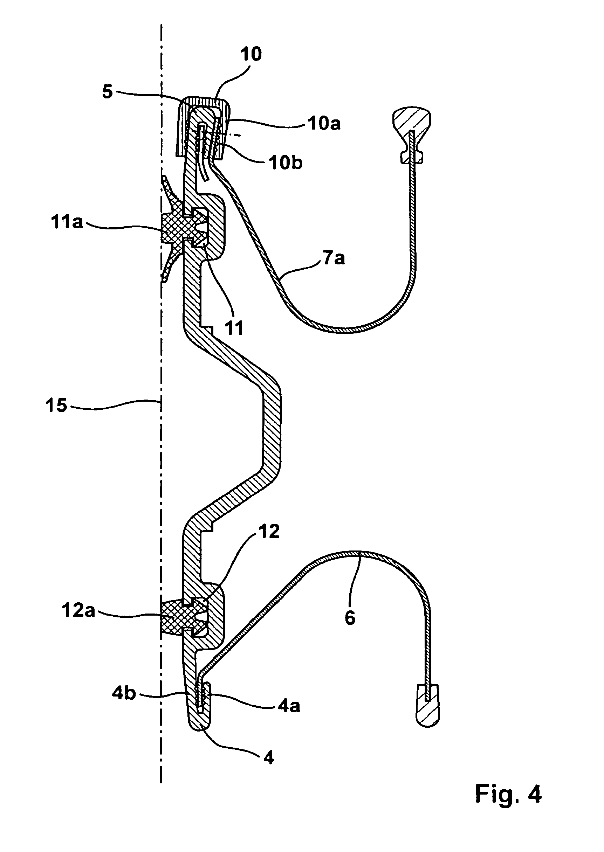

Der Rahmen 1 gemäß Fig. 1 ist in der Fig. 2, in Fig. 3 und auch in Fig. 4 im Querschnitt dargestellt. Der mit 1 bezeichnete Kuppelrahmen zeigt im Querschnitt zu beiden Enden jeweils eine U-förmige Aufnahme 4, 5, die der Aufnahme des Endes des Balges 7 bei der erstmaligen Herstellung dient. Die Fixierung des Balgendes in der U-förmigen Aufnahme 4, 5 erfolgt im Wesentlichen dadurch, dass die Schenkel 4a, 5a auf den anderen Schenkel 4b, 5b zu verformt werden, um hierdurch das Ende des einliegenden Balges 6, 7 zu fixieren. Wie bereits an anderer Stelle erläutert, ist der eine der beiden Bälge eines Übergangs mit einem Doppelwellenbalg auf der Außenseite des Übergangs angeordnet und wird deshalb auch als Außenbalg bezeichnet. Geht man davon aus, dass der Balg 7 sich auf der Außenseite des Übergangs befindet, wird der verschlissene Balg 7 unmittelbar nach der U-förmigen Aufnahme 5 abgeschnitten, wie sich dies aus Fig. 2 bzw. auch den Figuren 3 und 4 entnehmen lässt. Der neue Balg weist an seinem einen offenen Ende den Balgrahmen 8 auf, wobei der Balgrahmen 8 den neuen Balg 7a im Bereich seiner U-förmigen Öffnung zusammengepresst aufnimmt. Zunächst wird der U-förmige Balgrahmen 8 auf der U-förmigen Aufnahme 5 fixiert, was beispielsweise dadurch geschehen kann, dass der Balgrahmen 8 auf die U-förmige Aufnahme 5 aufgenietet wird. Als dann wird das Übersetzungsprofil 10, das im Querschnitt ebenfalls U-förmig ausgebildet ist, sowohl über die U-förmige Aufnahme als auch über den U-förmigen Balgrahmen gestülpt, um dann mit seinen Schenkeln 10a zusammengepresst oder geclincht zu werden, sodass sich eine innige Verbindung des Übersetzungsprofils sowohl mit dem U-förmigen Balgrahmen als auch mit der U-förmigen Aufnahme des Rahmens ergibt. Der Rahmen, sei er als Kuppelrahmen oder als Anschraubrahmen ausgebildet, besitzt des Weiteren zwei Nuten 11, 12 zur Aufnahme jeweils eines Dichtungsprofils 11 a, 12a. Mit den Dichtungsprofilen 11a, 12a liegt der Rahmen beispielsweise an der Stirnwand 15 des Fahrzeugsteils an. Hierbei besteht ein Abstand X zwischen der Stirnwand 15 und der hinteren Seite des Rahmens 1, wie sich dies ebenfalls in Anschauung von Fig. 2 ergibt. Dieser Abstand ist ausreichend, um den einen Schenkel 10a des Übersetzungsprofils über den Rahmen im Bereich der U-förmigen Aufnahme stülpen zu können, wie sich dies aus Fig. 2 ergibt.

Die Darstellung gemäß Fig. 3 unterscheidet sich von der gemäß Fig. 2 dadurch, dass der U-förmige Balgrahmen 28 zwei Schenkel 29, 30 aufweist, wobei der eine Schenkel 30 zur Fixierung des neuen Balges 7a auf den anderen Schenkel 29 zu gebogen wird. Der Schenkel 29 stützt sich mit dem Fuß 29a auf dem Rahmen 1 ab, wodurch verhindert wird, dass sich der im Querschnitt U-förmige Rahmen 28, wie sich dies aus Fig. 2 ergibt, beim Zusammenquetschen des Übersetzungsprofils 10 in Richtung auf die U-förmige Aufnahme 5 verschwenkt. Der Schenkel 29 stützt sich nicht nur über den Fuß 29a auf dem Rahmen 1 ab, sondern ebenfalls noch auf der Ausbauchung 11 b der Nut 11.

Bei der Variante gemäß Fig. 4 ist vorgesehen, dass der neue Balg 7a zunächst auf die U-förmige Aufnahme 5 aufgeklebt und/oder aufgenietet wird, und alsdann das mit 10 bezeichnete Übersetzungsprofil sowohl über die U-förmige Aufnahme 5 als auch über den Balg 7a gestülpt wird. Hiernach wird das Übersetzungsprofil 10 auf die U-förmige Aufnahme aufgeclincht oder aufgequetscht. Hierbei kann das Übersetzungsprofil im Bereich des Schenkels 10a Zähne 10b aufweisen, um das Balgende des neuen Balges quasi formschlüssig erfassen zu können.

## Patentansprüche

1. Rahmen (1) zur Aufnahme des Endes mindestens eines Balges (6, 7) und ein im Querschnitt U-förmiges Übersetzungsprofil (10), wobei der Rahmen (1) mindestens an einem Ende eine im Querschnitt U-förmige Aufnahme (4, 5) zum Erfassen des Balgendes eines Balges (6, 7) aufweist,
**dadurch gekennzeichnet,**
**dass** stirnseitig auf der U-förmigen Aufnahme (4, 5) das Ende eines Balges (7a) durch das im Querschnitt U-förmige Übersetzungsprofil (10) fixierbar ist.

2. Rahmen (1) und Profil (10) nach Anspruch 1,
**dadurch gekennzeichnet,**
**dass** das Ende des Balges (7a) mit der U-förmigen Aufnahme (4, 5) verklebt und/oder vernietet ist.

3. Rahmen (1) und Profil (10) nach Anspruch 1
**dadurch gekennzeichnet,**
**dass** das Ende des Balges (7a) einen im Querschnitt U-förmigen Balgrahmen (8, 28) aufweist, der durch das Übersetzungsprofil (10) stirnseitig auf der U-förmigen Aufnahme (4, 5) fixierbar ist

4. Rahmen (1) und Profil (10) nach einem der voranstehenden Ansprüche,
**dadurch gekennzeichnet,**
**dass** der Rahmen (1) zu beiden Enden jeweils eine im Querschnitt U-förmige Aufnahme (4, 5) zum Erfassen jeweils eines Balgendes eines Balges (6, 7) aufweist, wobei stirnseitig auf der jeweiligen U-förmigen Aufnahme (4, 5) jeweils ein im Querschnitt U-förmiger Balgrahmen (8, 28) anbringbar ist, wobei die beiden Öffnungen der beiden U-förmigen Aufnahmen (4, 5) aufeinander zuweisen.

5. Rahmen (1) und Profil (10) nach einem der voranstehenden Ansprüche 3 oder 4,
**dadurch gekennzeichnet,**
**dass** der Balgrahmen (8, 28) mit der U-förmigen Aufnahme (4, 5) des Rahmens (1) durch Nieten und/oder Kleben verbunden ist.

6. Rahmen (1) und Profil (10) nach einem der voranstehenden Ansprüche 3 bis 5,
**dadurch gekennzeichnet,**
**dass** das Übersetzungsprofil (10) auf den Balgrahmen (8, 28) und die U-förmige Aufnahme (4, 5) aufgepresst ist.

7. Rahmen (1) und Profil (10) nach einem der voranstehenden Ansprüche 3 bis 6,
**dadurch gekennzeichnet,**
**dass** der im Querschnitt U-förmige Balgrahmen (28) einen verlängerten Schenkel (29) aufweist, der sich auf dem Rahmen (1) abstützt.

8. Rahmen (1) und Profil (10) nach einem der voranstehenden Ansprüche,
**dadurch gekennzeichnet,**
**dass** der Rahmen (1) mindestens eine, vorzugsweise zwei umlaufende Nuten (11, 12) zur Aufnahme eines Dichtungsprofils (11 a, 12a) aufweist.

9. Rahmen (1) und Profil (10) nach einem der voranstehenden Ansprüche,
**dadurch gekennzeichnet,**
**dass** der Rahmen (1) ein Kuppelrahmen ist.

10. Rahmen (1) und Profil (10) nach einem der voranstehenden Ansprüche,
**dadurch gekennzeichnet,**
**dass** der Rahmen (1) ein Anschraubrahmen ist.

## Claims

1. A frame (1) for receiving the ends of at least one bellows (6, 7) and a transition profile (10) with a U-shaped cross-section, wherein the frame (1) has a receptacle (4, 5) with a U-shaped cross-section at at least one end for receiving the bellows end of a bellows (6, 7),
**characterized in that**
the end of a bellows (7a) is attachable to the front side of the U-shaped receptacle (4, 5) by the transition profile (10) with a U-shaped cross-section.

2. The frame (1) and profile (10) according to claim 1,
**characterized in that**
the end of the bellows (7a) is glued and/or riveted to the U-shaped receptacle (4, 5).

3. The frame (1) and profile (10) according to claim 1,
**characterized in that**
the end of the bellows (7a) has a bellows frame (8, 28) with a U-shaped cross-section that is attachable to the front side of the U-shaped receptacle (4, 5) by the transition profile (10).

4. The frame (1) and profile (10) according to one of the aforementioned claims,
**characterized in that**
on both ends the frame (1) has respectively one receptacle (4, 5) with a U-shaped cross-section for receiving respectively one bellows end of a bellows (6, 7), respectively one bellows frame (8, 28) with a U-shaped cross-section being attachable to the front side of the respective U-shaped receptacle, wherein the two openings of the two U-shaped receptacles (4, 5) point toward each other.

5. The frame (1) and profile (10) according to one of the aforementioned claims 3 or 4,
**characterized in that**
the bellows frame (8, 28) is connected to the U-shaped receptacle (4, 5) of the frame (1) by riveting or gluing.

6. The frame (1) and profile (10) according to one of the aforementioned claims 3 to 5,
**characterized in that**
the transition profile (10) is pressed onto the bellows frame (8, 28) and the U-shaped receptacle (4, 5).

7. The frame (1) and profile (10) according to one of the aforementioned claims 3 to 6,
**characterized in that**
the bellows frame (28) with a U-shaped cross-section has an elongated leg (29) that rests on the frame (1).

8. The frame (1) and profile (10) according to one of the aforementioned claims,
**characterized in that**
the frame (1) has at least one, preferably two circumferential grooves (11, 12) for receiving a sealing profile (11a, 12a).

9. The frame (1) and profile (10) according to one of the aforementioned claims,
**characterized in that**
the frame (1) is a coupling frame.

10. The frame (1) and profile (10) according to one of the aforementioned claims,
**characterized in that**
the frame (1) is a fastening frame.

## Revendications

1. Cadre (1) pour la fixation de l'extrémité d'au moins un soufflet (6, 7) et d'un profil (10) de liaison de section transversale en forme de U, dans lequel le cadre (1) comporte au moins à une extrémité un élément de maintien (4, 5) de section transversale en U, pour tenir l'extrémité d'un soufflet (6, 7),
**caractérisé en ce que**
l'extrémité du soufflet (7a) peut être fixée frontalement sur l'élément de maintien (4, 5) par le profil de liaison (10) de section transversale en forme de U.

2. Cadre (1) et profil (10) selon la revendication 1,
**caractérisé en ce que**
l'extrémité du soufflet (7a) et l'élément de maintien (4, 5) en forme de U sont collés et/ou rivetés.

3. Cadre (1) et profil (10) selon la revendication 1,
**caractérisé en ce que**
l'extrémité du soufflet (7a) comporte un cadre de soufflet (8, 28) de section transversale en forme de U, et est fixé au moyen du profil de liaison (10) frontalement sur l'élément de maintien (4, 5) en forme de U.

4. Cadre (1) et profil (10) selon l'une quelconque des revendications précédentes,
**caractérisé en ce que**
la cadre (1) comporte à ses deux extrémités respectivement un élément de maintien (4, 5) de section transversale en forme de U pour la fixation respective d'une extrémité de soufflet (6, 7), dans lequel, frontalement sur chacun des éléments de maintien (4, 5) de section en U est fixé un cadre de soufflet (8, 28) de section transversale en U, dans lequel les deux ouvertures des deux éléments de maintien en forme de U (4, 5) sont disposées face à face.

5. Cadre (1) et profil (10) selon les revendications précédentes 3 ou 4,
**caractérisé en ce que**
le cadre de soufflet (8, 28) est lié à l'élément de maintien (4, 5) du cadre (1) par rivetage et/ou par collage.

6. Cadre (1) et profil (10) selon l'une des revendications précédentes 3 à 5,
**caractérisé en ce que**
le profil de liaison (10) est lié au cadre de soufflet (8, 28) et à l'élément de maintien (4, 5) par compression-serrage.

7. Cadre (1) et profil (10) selon l'une des revendications précédentes 3 à 6,
**caractérisé en ce que**
le cadre de soufflet (28) de section transversale en forme de U présente un bras prolongé (29) qui prend appui sur le cadre (1).

8. Cadre (1) et profil (10) selon l'une des revendications précédentes,
**caractérisé en ce que**
le cadre (1) comporte au moins une et de préférence deux nervures (11, 12) pour recevoir un joint d'étanchéité (11a, 12a).

9. Cadre (1) et profil (10) selon l'une des revendications précédentes,
**caractérisé en ce que**
le cadre (1) est un cadre d'interconnexion.

10. Cadre (1) et profil (10) selon l'une des revendications précédentes,
**caractérisé en ce que**
le cadre (1) est un cadre rapporté à fixer par vissage.
